# EUROPÄISCHE PATENTANMELDUNG

(11) **EP 2 177 856 A2**
(43) Veröffentlichungstag der Anmeldung: **21.04.2010**
(21) Anmeldenummer: 09171475.8
(22) Anmeldetag: 28.09.2009
(51) Int. Cl.: F28D 20/00, F28F 27/00, F24D 3/08

(54) **Verfahren und Vorrichtung zum Betrieb eines Speichertanks, insbesondere eines Wasserspeichertanks**

(30) Priorität: 16.10.2008 DE 102008052022
(71) Anmelder: Robert Bosch GmbH, 70442 Stuttgart (DE)
(72) Erfinder: Boedeker, Hendrik, 71229, Leonberg/Hoefingen (DE); Fischer, Martin, 71229, Leonberg (DE)

(57) **Zusammenfassung**

Die Erfindung betrifft ein Verfahren zum Betrieb eines Speichertanks (1), insbesondere eines Wasserspeichertanks. Die Erfindung betrifft weiter eine Vorrichtung (100, 200, 300, 400) zum Betrieb eines Speichertanks (1), insbesondere eines Wasserspeichertanks und ein Speichersystem für eine Heizeinrichtung, insbesondere zum Speichern nicht-fossil gewonnener Energie für eine Solar- oder Erdwärmeheizeinrichtung.

Es ist eine Aufgabe der Erfindung, ein Verfahren und eine Vorrichtung (100, 200, 300, 400) sowie ein Speichersystem zu schaffen, bei denen ein Betrieb eines Speichertanks (1), insbesondere eines Wasserspeichertanks optimiert ist, insbesondere so, dass ein Ertrag einer regenerativen Energiegewinnung maximiert und gleichzeitig ein Bedarf an konventioneller Heizung minimiert ist.

Gekennzeichnet ist das Verfahren dadurch, dass Mittel zum Verändern eines nutzbaren Tankvolumens des Speichertanks (1) aktiv angesteuert werden, um eine Volumenreduzierung des zur Warmwasserspeicherung nutzbaren Tankvolumens zu bewirken. Gekennzeichnet ist die Vorrichtung (100, 200, 300, 400) dadurch, dass der Speichertank (1) gesamtvolumenverändernde Mittel aufweist, um durch Verändern mindestens eines Wandungsbereichs der Mittel eine Volumenreduzierung des Tankvolumens zu bewirken. Gekennzeichnet ist das Speichersystem dadurch, dass das Speichersystem eine erfindungsgemäße Vorrichtung (100, 200, 300, 400) aufweist.

## Beschreibung

Die Erfindung betrifft ein Verfahren zum Betrieb eines Speichertanks, insbesondere eines Wasserspeichertanks, nach dem Oberbegriff des Patentanspruchs 1. Weiter betrifft die Erfindung eine Vorrichtung zum Betrieb eines Speichertanks, insbesondere eines Wasserspeichertanks nach dem Oberbegriff des Anspruchs 4. Zudem betrifft die Erfindung ein Speichersystem für eine Heizeinrichtung, insbesondere zum Speichern nicht-fossil gewonnener Energie für eine Solar- oder Erdwärmeheizeinrichtung, nach dem Oberbegriff des Anspruchs 10.

Die Gewinnung verschiedener Energieformen aus nicht-fossilen Quellen bekommt in den letzten Jahren immer mehr Bedeutung. Eine wichtige Technologie stellen in diesem Kontext solarthermische Systeme dar. Hier wird die Strahlungsenergie der Sonne mittels eines Kollektors auf ein durchströmendes Solarfluid übertragen, das die Energie in Form von Wärme aufnimmt. Ein ähnliches Prinzip verfolgen Erdsonden. Hier wird die in tieferen Erdschichten gespeicherte thermische Energie durch Konduktion auf ein Rohr übertragen, durch das wiederum ein geeignetes Fluid fließt. In beiden Fällen befindet sich zur Speicherung der gewonnenen thermischen Energie unweit des Kollektorsystems ein Brauchwassertank, der mit einem Primärsystem über einen Wärmetauscher, ggf. mit einer Wärmepumpe, verbunden ist. Der Brauchwassertank ist beispielsweise mit einer Frischwasserzufuhr eines Gebäudes direkt verbunden. Aus dem Brauchwassertank zapfen Verbraucher, zum Beispiel über eine Dusche, einen Wasserhahn, eine Badewanne und dergleichen, mittels eines Leitungsdrucks direkt warmes Wasser ab. Da ein Bedarf an Warmwasser auch dann bestehen kann, wenn die Kollektoren keine oder nur eine unzureichende Menge an Wärmeenergie liefern, ist der Brauchwassertank in der Regel auch mit einer konventionellen (fossilen) Heizquelle, zum Beispiel über einen Brennstoff wie Öl, Gas und dergleichen, ausgestattet. Eine temperaturbasierte Steuerung, zum Beispiel über eine Temperaturmessung nahe einer Zapföffnung an einer Oberseite des Brauchwassertanks, regelt einen Betrieb zum Beispiel einer Heizung.

Nach einer Installation einer Solar- oder Erdwärmeanlage liegen Größen oder Parameter von dem Brauchwassertank und anderen Bauteilen fest. Wie effizient die Anlage arbeitet, hängt stark vom Zapfprofil, also vom zeitlichen Verlauf des Bedarfs und den äußeren Gegebenheiten wie Sonnen-Einstrahlungsprofil, Erd-Temperaturprofil usw., ab. Hat zum Beispiel ein kleiner Haushalt morgens Bedarf an sehr warmem Duschwasser, so ist ein kleines Tankvolumen empfehlenswert, damit von der in geringem Maße vorhandenen Strahlung eine kleine Wassermenge schnell erwärmt wird. Wird hingegen z. B. von einer Großfamilie abends viel warmes Wasser benötigt, so ist ein großer Tank von Vorteil, um im Verlauf des Tages die am Mittag stärkste Einstrahlung zu nutzen und über eine längere Zeit viel Energie zu speichern.

Ändert sich im Laufe der Zeit die Bedarfssituation, beispielsweise bei unterschiedlicher Bewohnerzahl eines Haushalts, Umstellung von Werktagen auf Wochenendtage und dergleichen, so arbeitet das Gesamtsystem einen Teil der Zeit in einem ungünstigen Betriebsmodus, was den zeitgemittelten Wirkungsgrad der Anlage reduzieren kann.

Aus der DE 101 20 332 A1 ist beispielsweise ein Brauchwassertrank bekannt. Dieser weist einen Wellrohrkompensator auf, um ein Fluid mit einem unterschiedlichen Temperaturniveau, durch einen Brauchwassertank zu fördern.

Aus der DE 10 2004 039 626 B4 ist eine Speichervorrichtung für thermische Energie bekannt, umfassend mindestens einen Tank für fließfähiges Speichermedium, wobei der mindestens eine Tank mindestens eine erste Kammer für Speichermedium, welches zur Wärmeabgabe vorgesehen ist, und eine zweite Kammer für Speichermedium, welches zur Wärmeaufnahme vorgesehen ist, aufweist. Dabei besitzt der mindestens eine Tank mindestens eine bewegliche Wand, durch deren Stellung das Volumen der ersten Kammer und/oder der zweiten Kammer einstellbar ist und das Verhältnis der Volumina der ersten Kammer und der zweiten Kammer variabel einstellbar ist, wobei die mindestens eine bewegliche Wand drehbar oder schwenkbar ist.

Derartige Tankeinrichtungen weisen mehrere Kammern für Fluide mit unterschiedlichen Eigenschaften auf, wobei die Kammern flexibel miteinander derart gekoppelt sind, dass die Verhältnisse der Volumina der Kammern zueinander in einem vorbestimmten Rahmen an die Eigenschaften der Fluide anpassbar sind.

Der Erfindung liegt die Aufgabe zugrunde, ein Verfahren und eine Vorrichtung sowie ein Speichersystem zu schaffen, bei denen ein Betrieb eines Speichertanks, insbesondere eines Wasserspeichertanks optimiert ist, insbesondere so, dass ein Ertrag einer regenerativen Energiegewinnung maximiert und gleichzeitig ein Bedarf an konventioneller Heizung minimiert ist.

Erfindungsgemäß wird dies durch die Gegenstände mit den Merkmalen des Patentanspruchs 1, des Patentanspruchs 4 und des Patentanspruchs 10 gelöst. Vorteilhafte Weiterbildungen sind den Unteransprüchen zu entnehmen.

Das erfindungsgemäße Verfahren zum Betrieb eines Speichertanks, insbesondere eines Wasserspeichertanks ist dadurch gekennzeichnet, dass Mittel zum Verändern eines nutzbaren Tankvolumens des Speichertanks aktiv angesteuert werden, um eine Volumenreduzierung des zur Warmwasserspeicherung nutzbaren Tankvolumens zu bewirken. Aktuelle Systemsimulationen haben gezeigt, dass das Tankvolumen maßgeblichen Einfluss auf den Gesamtwirkungsgrad einer Heizanlage hat. Durch Verändern des nutzbaren Tankvolumens, insbesondere durch eine aktive Steuerung, lässt sich somit ein Wirkungsgrad optimieren.

In einer Ausführungsform der vorliegenden Erfindung ist vorgesehen, dass das aktive Steuern die folgenden Schritte umfasst: Erstens das Erfassen einer Anforderungssituation an den Speichertank und zweitens das Steuern des nutzbaren Tankvolumens in Abhängigkeit von der erfassten Anforderungssituation. Das Tankvolumen lässt sich so adaptiert an eine tatsächliche Anforderung aktiv anpassen, unabhängig von Eigenschaften des in dem Tank, der insbesondere ein Volumen zur Bevorratung eines Wärmespeichermediums aufweist, bevorrateten Fluids, insbesondere dessen Temperatur. Die Steuerung ist somit fluid- und temperaturunabhängig, wobei diese Parameter über die Steuerung berücksichtigt werden können.

Bei einer weiteren Ausführungsform ist vorgesehen, dass das Steuern das Verändern eines von einer Wandung der Mittel zumindest teilweise begrenzten Raums umfasst. Das Verändern kann dabei ein Verändern des Volumens der Mittel umfassen. Auch kann das Verändern ein Bewegen einer Wandung umfassen, sodass durch das Bewegen der Wandung eine Volumenveränderung stattfindet, wie beispielsweise beim Bewegen eines Kolbens in einem Zylinder

Die erfindungsgemäße Vorrichtung zum Betrieb eines Speichertanks, insbesondere eines Wasserspeichertanks, umfassend einen Speichertank zur Speicherung eines Fluids ist dadurch gekennzeichnet, dass der Speichertank gesamtvolumenverändernde Mittel aufweist, um durch Verändern mindestens eines Wandungsbereichs der Mittel eine Volumenreduzierung des Tankvolumens zu bewirken. Die Wandungen des Tanks können beispielsweise zueinander bewegt werden, sodass ein kleineres Tankvolumen gebildet wird. Eine in dem Tank befindliche, gekapselte Kammer mit entsprechenden Wandungen kann beispielsweise derart verändert werden, dass deren Wandungen auseinander bewegt werden, um ein größeres Volumen von dem Tankvolumen einzunehmen.

In einer weiteren Ausführungsform der vorliegenden Erfindung ist vorgesehen, dass die Vorrichtung eine Steuereinrichtung umfasst, welche das Verändern des Wandungsbereichs steuert.

Ein weiteres Ausführungsbeispiel der vorliegenden Erfindung sieht vor, dass die Steuereinrichtung eine Erfassungseinheit zum Erfassen der Anforderungssituation an den Speichertank umfasst, um ein an die Anforderungssituation adaptiertes Verändern der Wandung zu bewirken.

Noch ein weiteres Ausführungsbeispiel der vorliegenden Erfindung sieht vor, dass die Mittel einen Ausdehnungskörper mit variabler Wandung aufweisen, welcher bei Befüllen mit einem Ausfüllmedium sein Volumen verändert, wobei der Ausdehnungskörper zumindest teilweise in dem Tankvolumen angeordnet ist.

Wiederum ein weiteres Ausführungsbeispiel der vorliegenden Erfindung sieht vor, dass die Mittel mindestens eine zumindest teilweise bewegbare Trennwandung umfassen, um mindestens einen variierbaren Trennraum von dem Tankvolumen abzugrenzen.

Weiter sieht ein anderes Ausführungsbeispiel der vorliegenden Erfindung vor, dass mehrere Trennwandungen zur Abgrenzung mehrerer Trennräume ausgebildet sind, die über Bewegungselemente mit dem Tankvolumen fluidisch verbindbar oder trennbar sind.

Das erfindungsgemäße Speichersystem für eine Heizeinrichtung, insbesondere zum Speichern nicht-fossil gewonnener Energie für eine Solar- oder Erdwärmeheizeinrichtung, mit mindestens einem Speichertank zum Abzapfen der Energie, ist dadurch gekennzeichnet, dass das Speichersystem eine erfindungsgemäße Vorrichtung aufweist. Das Speichersystem kann Teil einer Heizungsanlage sein.

Mit dem erfindungsgemäßen Verfahren, der erfindungsgemäßen Vorrichtung und dem erfindungsgemäßen Speichersystem werden insbesondere die folgenden Vorteile realisiert: Grundlage der Erfindung bildet ein bestehendes Tanksystem, das in seinem Gesamtvolumen dynamisch modifiziert werden kann. Dies kann beispielsweise durch ein Luftkissen oder durch mehrere Tanksegmente geschehen. Eine vorprogrammierte oder lernfähige Steuerung definiert eine Bedarfssituation und passt das Tankvolumen dieser auf schneller Zeitskala an. Auf diese Weise wird wie bei einem konventionellen System nur ein Tank fest installiert, wobei das System den Ertrag, beispielsweise den Jahresertrag maximiert. Dadurch ist eine deutliche Steigerung des Wirkungsgrads möglich. Bestehende Tanks lassen sich entsprechend nachrüsten. Das Verfahren bzw. die Vorrichtung ist einfach umzusetzen und einfach aufgebaut. Die Steuerung lässt sich in vorhandene Steuerungen leicht integrieren.

Die Zeichnungen stellen mehrere Ausführungsbeispiele der Erfindung dar. Es zeigt jeweils eine Vorrichtung zum Betrieb des Speichertanks:
- Fig. 1: schematisch in einer Seitenansicht mit einem Speichertank mit einer ersten Ausführungsform,
- Fig. 2: schematisch in einer Seitenansicht mit einem Speichertank mit einer zweiten Ausführungsform,
- Fig. 3: schematisch in einer Seitenansicht mit einem Speichertank mit einer dritten Ausführungsform und
- Fig. 4: schematisch in einer Seitenansicht mit einem Speichertank mit einer vierten Ausführungsform.

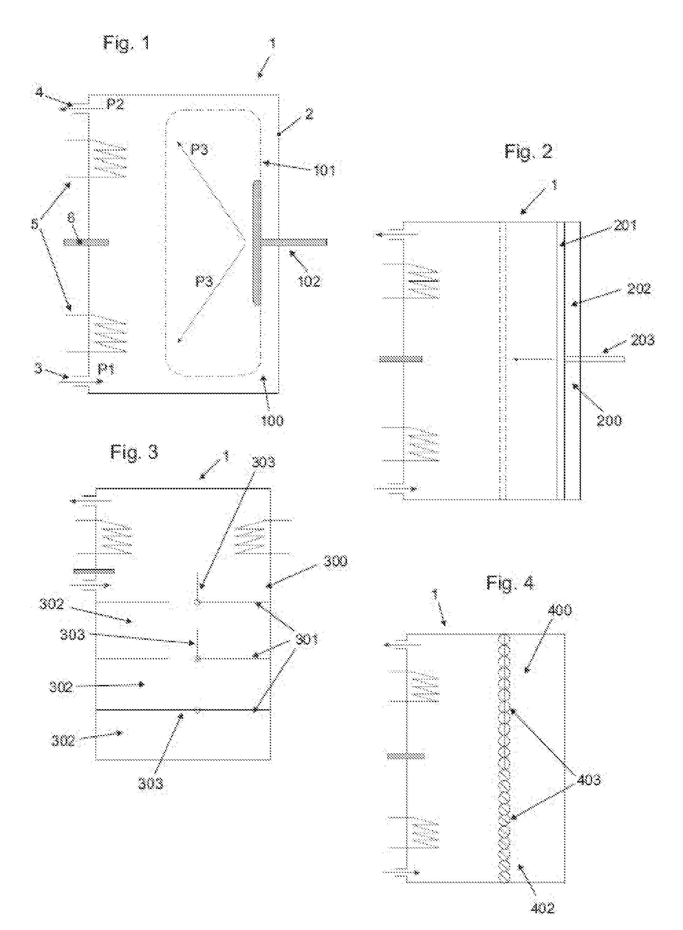

Fig. 1 zeigt schematisch in einer Seitenansicht einen Speichertank 1 mit einer ersten Ausführungsform einer erfindungsgemäßen Vorrichtung 100 zum Betrieb des Speichertanks 1. Der Speichertank 1 ist als herkömmlicher Speichertank mit einem kesselartigen Gehäuse 2 ausgebildet. In einem unteren Bereich des Speichertanks 1 ist ein Einlass 3 zum Einlassen eines Wärmeträgers, wie beispielsweise Wasser, ausgebildet (Pfeil P1). In einem oberen Bereich des Speichertanks 1 ist ein Auslass 4 zum Auslassen des Wärmeträgers ausgebildet (Pfeil P2). Zudem weist der Speichertank 1 Wärmetauscher 5 auf. Über einen Temperatursensor 6, der in oder an dem Speichertank 1 vorgesehen ist, lässt sich eine Temperatur des Wärmeträgers erfassen. Die Vorrichtung 100 ist in der Figur 1 als Ausdehnungskörper oder Füllkörper 101, beispielsweise als Luftkissen, ausgebildet, welcher über eine Fülleinrichtung 102 mit einem Füllmedium, wie beispielsweise Luft, gefüllt werden kann. Durch das Füllen dehnt sich der Füllkörper 101 aus und nimmt in dem Speichertank 1 ein größeres Volumen ein, welches nicht mehr für die Bevorratung des Wärmeträgers nutzbar ist. Der Füllkörper 101 ist als gekapselter Füllkörper ausgebildet, der nicht von dem Wärmeträger durchströmbar ist. Somit ist der Füllkörper 101 unabhängig von dem Wärmeträger füllbar. Der Füllkörper 101 ist über eine nicht dargestellte Steuerung aktiv ansteuerbar. Die Steuerung steuert die Fülleinrichtung 102 an, sodass das Füllmedium entsprechend zu- oder abgeführt werden kann. Die Pfeile P3 stellen in der Figur ein Befüllen mit Luft dar. Der Füllkörper 101 erstreckt sich vorzugsweise wie dargestellt in Richtung der Höhe des Speichertanks 1. Dadurch wird eine Schichtspeicherung nicht oder nur unwesentlich durch den Füllkörper 101 beeinträchtigt.

Fig. 2 zeigt schematisch in einer Seitenansicht den Speichertank 1 nach Fig. 1 mit einer anderen Ausführungsform einer Vorrichtung 200 zum Betrieb des Speichertanks 1. Die Vorrichtung 200 umfasst eine verschiebbare Wandung 201, die über eine nicht dargestellte Steuerung verschiebbar ist. Die Wandung 201 ist dicht an dem Gehäuse 2 angrenzend, sodass durch Verschieben der Wandung 201 ein zur Bevorratung des Wärmeträgers nutzbares Volumen veränderbar ist. Auf diese Weise ist ein gekapselter Hohlraum 202 schaffbar, der nicht zur Bevorratung des Wärmeträgers nutzbar ist. Die Wandung 201 lässt sich beispielsweise über einen Aktor 203 bewegen. Der Aktor 203 kann mit der Steuerung gekoppelt sein. Durch die Wandung 201 wird vorzugsweise das Volumen des Speichertanks 1 über dessen gesamte Höhe verändert.

Fig. 3 zeigt schematisch in einer Seitenansicht den Speichertank 1 mit einer anderen Ausführungsform einer Vorrichtung 300 zum Betrieb des Speichertanks 1. Die Vorrichtung 300 umfasst mehrere durch Trennwände 301 ausgebildete Segmente 302. Die Trennwände 301 sind als thermisch gut isolierende Wände ausgebildet, um abgedichtete, isolierende Segmente 302 zu dem Tankvolumen auszubilden. Die Trennwände 301 weisen Verschlusseinheiten 303 auf, mit welchen sich die Trennwände 301 verschließbar oder durchlässig ausbilden lassen. Die Segmente 302 sind sequenziell angeordnet. Die Verschlusseinheiten 303, die beispielsweise als Öffnungsklappen ausgebildet sein können, sind über die nicht dargestellte Steuerung ansteuerbar, sodass sich ein Tankvolumen über die Steuerung verändern lässt.

Fig. 4 zeigt schematisch in einer Seitenansicht den Speichertank 1 mit einer anderen Ausführungsform einer Vorrichtung 400 zum Betrieb des Speichertanks 1. Die Vorrichtung 400 umfasst mehrere Verschlusseinheiten 403, mit welchen Segmente 402 fluidisch mit dem Tankvolumen verbunden oder getrennt werden können. Die Verschlusseinheiten 403 können als einzeln oder kollektiv rotierbare Lamellen ausgebildet sein.

Das Speichersystem mit variabler Größe lässt sich in einen konventionellen, als Warmwasserspeicher ausgebildeten Speichertank 1 nachrüsten. Der Speichertank 1 verfügt über einen Einlass an einer Unterseite, einen Auslass an einer Oberseite, zwei Wärmetauscher 5 für regenerative Energie und Heizung sowie über eine Einheit für Temperaturmessung 6 im Tank. Der als Wasser ausgebildete Wärmeträger im Speichertank 1 steht unter dem von einem Wasserwerk gelieferten Leitungsdruck von mehreren bar. Das Volumen des Speichertanks 1 wird bei einer Installation des Speichersystems so gewählt, dass es dem Volumen entspricht, welches bei allen möglichen Zapfszenarien als maximales optimales Volumen zur Verfügung stehen soll. Auf diese Weise muss die dynamische Steuerung in der Lage sein, das maximale Volumen zeitweise zu reduzieren. Für die Reduktion des Tankvolumens gibt es verschiedene technische Realisierungsmöglichkeiten. Eine einfache Variante besteht in einem aufblasbaren Luftkissen, das im Speichertank 1 angebracht ist (Fig. 1). Das Kissen kann manuell oder von der Steuerung aufgeblasen oder entleert werden. Im ganz oder teilweise aufgeblasenen Zustand verdrängt das Kissen, welches eine extrem kleine Wärmekapazität besitzt, einen Teil des in dem Speichertank 1 bevorrateten Wassers, was das Tankvolumen effektiv reduziert. Statt des Kissens kann auch eine starre, aber bewegliche Wand verwendet werden, die zum Beispiel bei zylindrischer Bauform des Speichertanks 1 wie ein Kolben bewegt wird und so Wasser durch Luft verdrängt (Fig. 2).

Ein weiteres Prinzip teilt den Speichertank 1 in mehrere verbundene Kammern oder Segmente 302, deren Zwischenwände oder Trennwände 301 thermisch gut isoliert sind (Fig. 3). Das Tankvolumen wird durch Verbinden und Abtrennen der einzelnen Kammern modifiziert. Neben Öffnungsklappen in einer festen Wand können auch andere Trennmechanismen angewendet werden. Denkbar wäre z. B. eine Wand aus drehbaren Lamellen ähnlich einem Sonnenschutz vor großen Fenstern, in dem die einzelnen Lamellen durch Rotation komplett schließen oder öffnen (Fig. 4). Ähnlich wäre ein Aufbau, in dem die Lamellen abwechselnd stationär und beweglich sind und die bewegliche Hälfte zum Öffnen der Wand hinter die stationäre Nachbarlamelle geschoben wird. Diese Ausführungsform lässt sich auch für ein neuartiges Tank-Gesamtkonzept verwenden. So könnte beispielsweise der gesamte Speichertank 1 aus aufblasbaren Schichten aufgebaut werden. Dadurch würde neben einer einfachen dynamischen Größenänderung der Speichertank 1 leicht, einfach zu transportieren und im Laufe der Zeit modular erweiterbar ausgebildet sein. Die Steuerung des Tankvolumens könnte auf verschiedene Weisen erfolgen. Ändert sich die Anforderungssituation nur sehr selten, zum Beispiel nur im Wechsel zwischen Sommer und Winter, so kann der Benutzer die Umstellung manuell vornehmen. Treten mehrere wohldefinierte Szenarien auf, können diese in das Steuergerät einprogrammiert und beispielsweise auf Knopfdruck umgeschaltet werden. In der komplexesten Ausbaustufe kann das Steuergerät selbstständig den Bedarf verfolgen und gegebenenfalls aus Wetterdaten den in der nächsten Zeit auftretenden solaren Ertrag prognostizieren, um vollautomatisch das Tankvolumen oder die Tankgröße anzupassen.

## Patentansprüche

1. Verfahren zum Betrieb eines Speichertanks (1), insbesondere eines Wasserspeichertanks,
**dadurch gekennzeichnet, dass** Mittel zum Verändern eines nutzbaren Tankvolumens des Speichertanks (1) aktiv angesteuert werden, um eine Volumenreduzierung des zur Warmwasserspeicherung nutzbaren Tankvolumens zu bewirken.

2. Verfahren nach Anspruch 1,
**dadurch gekennzeichnet, dass** das aktive Steuern erstens den Schritt des Erfassens einer Anforderungssituation an den Speichertank (1) und zweitens des Steuerns des nutzbaren Tankvolumens in Abhängigkeit von der erfassten Anforderungssituation umfasst.

3. Verfahren nach Anspruch 1 oder 2,
**dadurch gekennzeichnet, dass** das Steuern das Verändern eines von einer Wandung der Mittel zumindest teilweise begrenzten Raumes umfasst.

4. Vorrichtung (100, 200, 300, 400) zum Betrieb eines Speichertanks (1), insbesondere eines Wasserspeichertanks, umfassend einen Speichertank (1) zur Speicherung eines Fluids,
**dadurch gekennzeichnet, dass** der Speichertank (1) gesamtvolumenverändernde Mittel aufweist, um durch Verändern mindestens eines Wandungsbereichs der Mittel eine Volumenreduzierung des Tankvolumens zu bewirken.

5. Vorrichtung (100, 200, 300, 400) nach Anspruch 4,
**dadurch gekennzeichnet, dass** die Vorrichtung (100, 200, 300, 400) eine Steuereinrichtung umfasst, welche das Verändern des Wandungsbereichs steuert.

6. Vorrichtung (100, 200, 300, 400) nach einem Anspruch 4 oder 5,
**dadurch gekennzeichnet, dass** die Steuereinrichtung eine Erfassungseinheit zum Erfassen der Anforderungssituation an den Speichertank (1) umfasst, um ein an die Anforderungssituation adaptiertes Verändern der Wandung zu bewirken.

7. Vorrichtung (100, 200, 300, 400) nach einem der Ansprüche 4 bis 6,
**dadurch gekennzeichnet, dass** die Mittel einen Ausdehnungskörper (101) mit variabler Wandung aufweisen, welcher bei Befüllen mit einem Ausfüllmedium sein Volumen verändert, wobei der Ausdehnungskörper (101) zumindest teilweise in dem Tankvolumen angeordnet ist.

8. Vorrichtung (100, 200, 300, 400) nach einem der Ansprüche 4 bis 7,
**dadurch gekennzeichnet, dass** die Mittel mindestens eine zumindest teilweise bewegbare Trennwandung umfassen, um mindestens einen variierbaren Trennraum von dem Tankvolumen abzugrenzen.

9. Vorrichtung (100, 200, 300, 400) nach einem der Ansprüche 4 bis 8,
**dadurch gekennzeichnet, dass** mehrere Trennwandungen zur Abgrenzung mehrerer Trennräume ausgebildet sind, die über Bewegungselemente mit dem Tankvolumen fluidisch verbindbar oder trennbar sind.

10. Speichersystem für eine Heizeinrichtung, insbesondere zum Speichern nicht-fossil gewonnener Energie für eine Solar- oder Erdwärmeheizeinrichtung, mit mindestens einem Speichertank (1) zum Abzapfen der Energie,
**dadurch gekennzeichnet, dass** das Speichersystem eine Vorrichtung (100, 200, 300, 400) nach einem der vorherigen Ansprüche 4 bis 9 aufweist.
